# FASCICULE DE BREVET EUROPEEN

(11) **EP 4 093 945 B1**
(45) Date de publication et mention de la délivrance du brevet: **21.08.2024**
(21) Numéro de dépôt: 21705587.0
(22) Date de dépôt: 19.01.2021
(51) Int. Cl.: F01D 5/14

(54) **PIÈCE OU ENSEMBLE DE PIÈCES DE TURBOMACHINE**
TURBOMASCHINENTEIL ODER ANORDNUNG VON BAUTEILEN
TURBOMACHINE PART OR ASSEMBLY OF PARTS

(30) Priorité: 23.01.2020 FR 2000668
(43) Date de publication de la demande: 30.11.2022
(73) Titulaire: SAFRAN, 75015 Paris (FR)
(72) Inventeur: RIERA, William Henri Joseph, 77550 MOISSY-CRAMAYEL (FR); MONDIN, Gabriel Jacques Victor, 77550 MOISSY-CRAMAYEL (FR)
(74) Mandataire: Regimbeau
(86) Numéro de dépôt international: PCT/FR2021/050093
(87) Numéro de publication internationale: WO 2021/148751

(56) Documents cités:
- EP-A1- 3 205 820
- FR-A1- 3 014 943
- JP-A- 2014 163 367
- US-A1- 2014 286 773

## Description

### Domaine technique général

La présente invention concerne une pièce de turbomachine comprenant des pales et une plateforme présentant une surface non-axisymétrique.

### Art antérieur

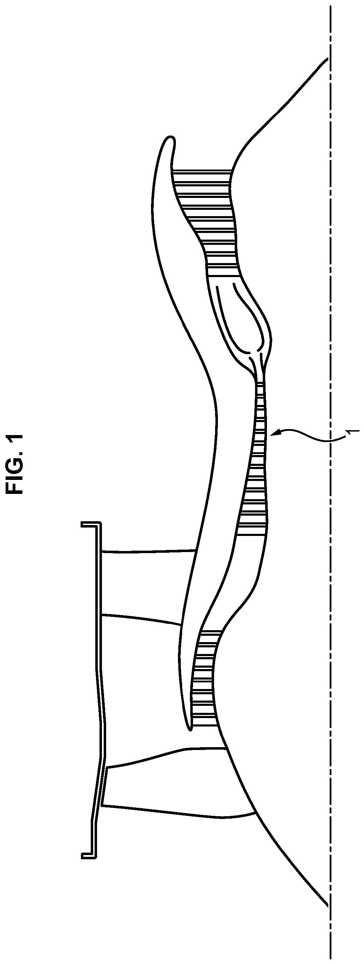

La nécessité d'amélioration constante des performances des équipements, en particulier aéronautiques, par exemple des rotors ou des stators de turbomachines par exemple de turboréacteurs (c'est-à-dire l'ensemble formé d'un moyeu sur lequel sont fixées des aubes s'étendant radialement, tel que visible sur la figure 1), a conduit aujourd'hui à l'obtention de moyeux présentant une surface localement non-axisymétrique (c'est-à-dire qu'une coupe selon un plan perpendiculaire à l'axe de rotation n'est pas circulaire) au niveau de la veine, c'est-à-dire l'ensemble des canaux entre les aubes pour l'écoulement de fluide (en d'autres termes les sections inter-aubes). Plus précisément, une surface du moyeu est localement non-axisymétrique, si le rayon du moyeu au niveau de la zone varie en fonction de l'angle que forme ce rayon avec un axe vertical perpendiculaire à l'axe de révolution du moyen. Par opposition une surface du moyeu est localement axisymétrique, si le rayon du moyeu au niveau de la zone est constant quel que soit l'angle que forme ce rayon avec un axe vertical perpendiculaire à l'axe de révolution du moyen. La veine non-axisymétrique définit une surface globalement annulaire d'un espace tridimensionnel (une « tranche » du moyeu).

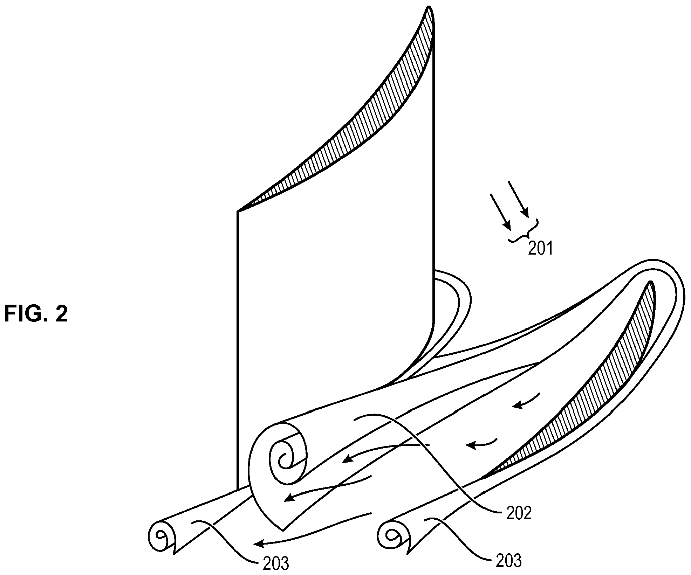

La figure 2 représente l'effet d'un flux entrant 201 sur l'écoulement de passage 202. Cet écoulement de passage 202 est généré par le gradient de pression entre la face en pression (intrados) et la face en dépression (extrados) d'une pale. Cet écoulement de passage 202 impacte l'extrados de la pale. En particulier à la jonction entre le moyeu et l'aubage d'un compresseur a lieu alors un « décollement de coin » 203 (« corner flow » dans la terminologie anglo-saxonne) de la couche limite sur la pale. Ce décollement de coin 203 génère des pertes de pression. L'objectif des ailettes est alors de réduire ces effets de décollement de coin 203 sur la pale en agissant directement sur l'écoulement de passage 202.

Les performances et l'opérabilité des compresseurs sont réduites à cause de ces décollements de coin 203 non désirés sur la pale. Cet effet est d'autant plus important que le « pas » (ratio entre l'espacement entre deux pales « s » sur la longueur de la corde « c » des pales) est grand. Afin d'alléger les futurs moteurs et les rendre plus compacts, les étages de compresseurs voient leur nombre de pale réduit, donc l'espacement entre deux pales augmente, de plus la corde des pales est réduite pour les rendre compacts axialement. Le « pas » devient donc plus important, et les effets de passage deviennent d'autant plus problématiques pour ces configurations.

Il est connu la demande de brevet WO2015092306A1 dans laquelle des ailettes sont ajoutées sur le moyeu ou le carter d'une turbomachine. Ces ailettes présentent une section transversale sensiblement triangulaire et permettent l'optimisation de la performance de la turbomachine pour une plage de points de fonctionnement de cette dernière. Il serait cependant intéressant d'obtenir des ailettes permettant un élargissement de la plage de points de fonctionnement pour lesquels les performances sont optimisées. Il serait en particulier intéressant d'améliorer les performances de la turbomachine lorsque l'angle d'incidence de l'écoulement, arrivant sur les pales, est élevé, c'est-à-dire avec un écoulement amont qui arrive avec un angle d'incidence, plus élevé que celui du cas nominal.

Il serait souhaitable de disposer d'un nouveau type d'ailette permettant de corriger ces problèmes afin d'améliorer les performances en termes de rendement de la turbomachine, pour une large plage de fonctionnement de celle-ci.

### Présentation générale de l'invention

Dans ce cadre, la présente invention résout le problème technique de l'obtention d'une ailette de turbomachine permettant d'améliorer les performances de la turbomachine pour une plage large de fonctionnement.

Il est ainsi proposé, selon un premier aspect, une pièce d'une turbomachine comprenant au moins des première et deuxième pales, et une plateforme à partir de laquelle s'étendent les pales. La plateforme présente entre l'intrados de la première pale et l'extrados de la deuxième pale une surface non axisymétrique définissant au moins une ailette. La pièce est caractérisée en ce qu'une section transversale de l'ailette est asymétrique. La section transversale asymétrique comprend deux faces obliques se rejoignant sur une arête dorsale, une face orientée vers l'intrados de la première pale ayant une pente plus raide qu'une face orientée vers l'extrados de la deuxième pale.

Dans un mode de réalisation une première tangente à la section transversale asymétrique de l'ailette au niveau d'un point d'inflexion de la face orientée vers l'intrados de la première pale et une deuxième tangente à la surface au niveau de l'intersection de la première tangente et de la surface se croisent en formant un premier angle. Une troisième tangente à la section transversale de l'ailette au niveau d'un point d'inflexion de la face orientée vers l'extrados de la deuxième pale et une quatrième tangente à la surface au niveau de l'intersection de la troisième tangente et de la surface, se croisent en formant un second angle. Le premier angle est plus faible que le deuxième angle.

Dans un mode de réalisation le premier angle est compris entre 90° et 130° et le deuxième angle est inférieur à 160°.

Dans un mode de réalisation une section longitudinale de l'ailette comprend une première partie dans laquelle une distance entre l'arête dorsale et la surface est croissante et une deuxième partie dans laquelle la distance est décroissante. Une tangente à la section longitudinale au niveau d'un point de mi-hauteur de la première partie et la surface se croisent en formant un quatrième angle en particulier compris entre 90° et 160. Une tangente à la section longitudinale au niveau d'un point de mi-hauteur de la deuxième partie et la surface se croisent en formant un cinquième angle en particulier compris entre 90° et 160.

Dans un mode de réalisation la position d'attaque de l'ailette est située à entre -10% et 50% de longueur relative d'une corde de pale s'étendant d'un bord d'attaque à un bord de fuite de la pale. La distance entre la position d'attaque de l'ailette et l'extrados de la deuxième pale est comprise entre 5% et 95% de la distance entre l'intrados de la première pale et l'extrados de la deuxième pale.

Dans un mode de réalisation une tangente à une corde de l'ailette au niveau de la position d'attaque de l'ailette et une tangente à la corde de la pale au niveau d'une position d'attaque de la pale se croisent en formant un sixième angle compris entre -10° et +10°.

Dans un mode de réalisation l'ailette a une longueur comprise entre 5% et 120% de la longueur de la corde de la pale.

Dans un mode de réalisation l'ailette a une largeur comprise entre 1% et 40% de la distance entre l'intrados de la première pale et l'extrados de la deuxième pale.

Dans un mode de réalisation la plateforme présente une forme annulaire le long de laquelle sont régulièrement disposées une pluralité de pales.

Dans un mode de réalisation la plateforme comprend la même surface non-axisymétrique entre chaque paire de pales consécutives.

Un autre aspect concerne une roue à aubes ou un redresseur de compresseur comprenant la pièce ou l'ensemble de pièce décrit précédemment.

Un autre aspect concerne une turbomachine comprenant une pièce ou ensemble de pièces selon décrit précédemment.

Un autre aspect concerne un aéronef comprenant une turbomachine telle que décrite précédemment.

### Brève description des dessins

D'autres caractéristiques et avantages de l'invention ressortiront encore de la description qui suit, laquelle est purement illustrative et non limitative, et doit être lue en regard des figures annexées :
- La figure 1, précédemment décrite, représente un exemple de turbomachine.
- La figure 2, précédemment décrite, représente un écoulement de passage et un décollement de coin provoqué par un flux sur une pale d'une turbomachine.
- Les figure 3 et 4 représentent deux exemples de configurations d'ailettes.
- La figure 5 représente une section transversale de l'ailette selon l'invention.
- La figure 6 représente une ailette avec un profil dit symétrique et une ailette avec un profil dit asymétrique.
- Les figures 7-a et 7-b représentent l'effet des ailettes selon l'invention sur un tourbillon de passage.
- La figure 8 représente avec une vue dans la direction azimutale la hauteur de l'ailette suivant l'invention en fonction de la direction axiale.
- La figure 9 représente la zone dans laquelle peut être placée la position d'attaque de l'ailette selon l'invention.
- La figure 10 représente la direction de l'ailette selon l'invention par rapport aux pales adjacentes.

### Description d'un ou plusieurs modes de réalisation

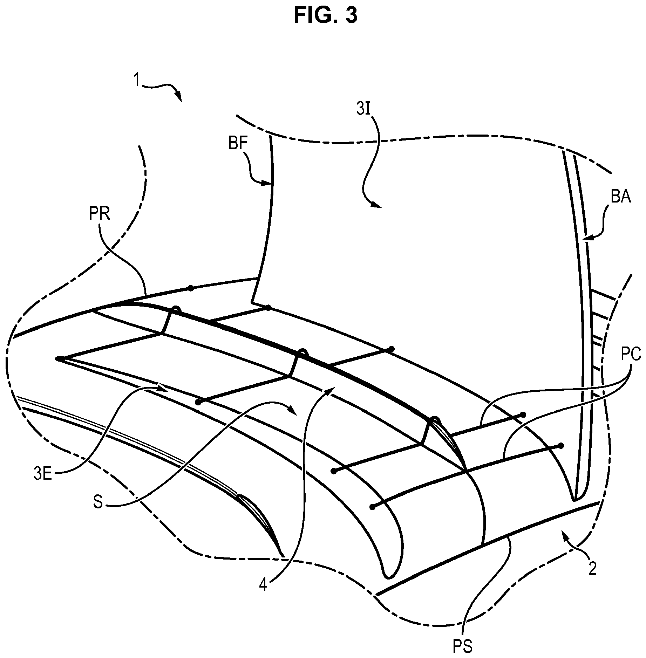

En référence à la figure 3, la présente pièce 1 de turbomachine présente au moins deux pales consécutives 3E, 31 et une plateforme 2 à partie de laquelle s'étendent les pales 3E, 3I. Le terme plateforme est ici interprété au sens large et désigne de façon générale tout élément d'une turbomachine sur lequel des pales 3E, 3I sont aptes à être montées (en s'étendant radialement) et présentant une paroi interne/externe contre laquelle l'air circule.

En particulier, la plateforme 2 peut être monobloc (et ainsi supporter l'ensemble des pales de la pièce 1), ou formée d'une pluralité d'organes élémentaires chacun supportant une unique pale 3E, 3I (un « pied » de la pale) de sorte à constituer une aube du type de celle représentée par la figure 3 En particulier, la plateforme 2 peut comprendre une partie de plateforme pour chacune des pales 3E, 3I dans un mode de réalisation avantageux qui sera décrit plus loin. La plateforme 2 peut délimiter une paroi radialement intérieure de la pièce 1 (le gaz passe autour) en définissant un moyeu, et/ou bien une paroi radialement extérieure de la pièce 1 (le gaz passe à l'intérieur, les pales 3I, 3E s'étendent vers le centre) en définissant alors un carter de la pièce 1. Il est à noter qu'une même pièce 1 peut comprendre simultanément ces deux types de plateforme 2. On comprendra que comme expliqué la pièce 1 peut être de nombreux types, notamment un étage de rotor (DAM pour « Disque Aubagé Monobloc », ou roue à aubes, selon le caractère intégral ou non de l'ensemble) ou un étage de stator (redresseur fixe, ou à aubes mobiles VSV « Variable Stator Vane » en terminologie anglo-saxonne), en particulier au niveau de l'entrée du flux secondaire qui comprend des aubes fixes servant à redresser le flux (redresseur OGV, « Outlet Guide Vane » en terminologie anglo-saxonne), voir figure 1 déjà introduite.

Dans la suite de la présente description, on prendra à ce titre l'exemple d'un étage d'OGV, mais l'homme du métier saura transposer aux autres types de pièces 1 (par exemple à une soufflante (« fan » en terminologie anglo-saxonne), ou à un étage du compresseur Basse Pression).

### Surface de plateforme

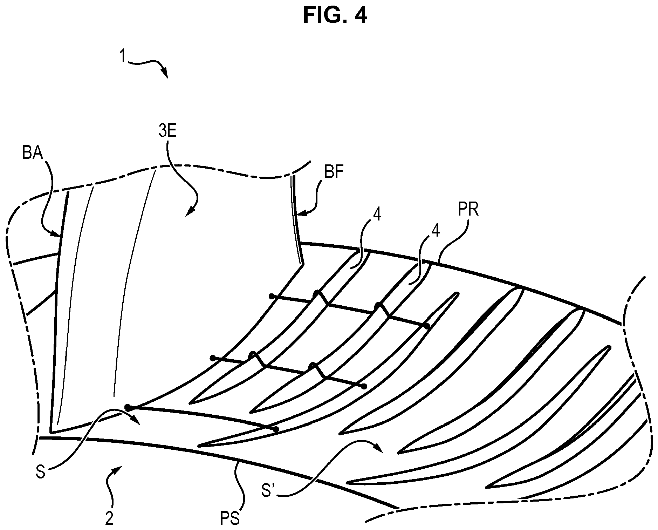

La présente pièce 1 se distingue par une géométrique particulière (non-axisymétrique) d'une surface S d'une plateforme 2 de la pièce 1, dont on observe un exemple de modélisation avantageuse sur les figures 3 et 4. La surface S s'étend entre deux pales 3E, 3I (dont une seule est visible sur chacune des figures 3 et 4 pour mieux observer la surface S. On repère néanmoins la trace de la pale manquante dans chaque cas), qui la limitent latéralement.

La surface S est en effet une partie d'une surface plus importante définissant une forme sensiblement torique autour de la pièce 1. Dans l'hypothèse (mais non limitative) d'une périodicité dans la circonférence de la pièce 1 (c'est-à-dire si les pales 3E, 3I sont identiques et réparties uniformément), la paroi est constituée d'une pluralité de surfaces identiques dupliquées entre chaque couple de pales 3E, 3I.

La surface S' visible sur la figure 4 est ainsi une duplication de la surface S.

Dans un mode de réalisation la plateforme 2 est composée d'une pluralité d'organes élémentaires chacun étant un pied supportant une pale 3E, 3I avec laquelle il forme une aube. Chacun de ces pieds de pale (nommés « parties de plateformes » dans la suite de la présente description) s'étend ainsi de part et d'autre de la pale 3E, 3I, d'où le fait que la surface S comprend des surfaces juxtaposées associées à deux pieds de pale distincts. La pièce 1 est alors un ensemble d'au moins deux aubes (ensemble pale/pied de pale) juxtaposées. On parle de plateformes « intégrées », par opposition à des plateformes « rapportées », c'est-à-dire indépendantes des pales (la surface S peut alors être constituée d'un seul élément). On comprendra que la présente invention n'est limitée à aucune structure particulière de la plateforme 2.

La surface S est limitée en amont par un premier plan extrémal, le « Plan de séparation » PS et en aval par un deuxième plan extrémal, le « Plan de raccord » PR, qui définissent chacun un contour axisymétrique, continu et de dérivée continue (la courbe correspondant à l'intersection entre chacun des plans PR et PS et la surface de la pièce 1 dans son ensemble est fermée et forme une boucle). La surface S présente une forme sensiblement parallélogrammique et s'étend continument entre les deux plans extrémaux PS, PR, et les deux pales 3E, 3I d'un couple de pales consécutives. L'une des pales de ce couple de pales est la première pale 3I, ou pale d'intrados. Elle présente en effet son intrados à la surface S. L'autre pale est la deuxième pale 3E, ou pale d'extrados. Elle présente en effet son intrados à la surface S. Chaque « deuxième pale » 3E est la « première pale » 3I d'une surface voisine telle que la surface S' dans la figure 4 (puisque chaque pale 3E, 3I présente un intrados et un extrados).

### Profil de la section transversale de l'ailette

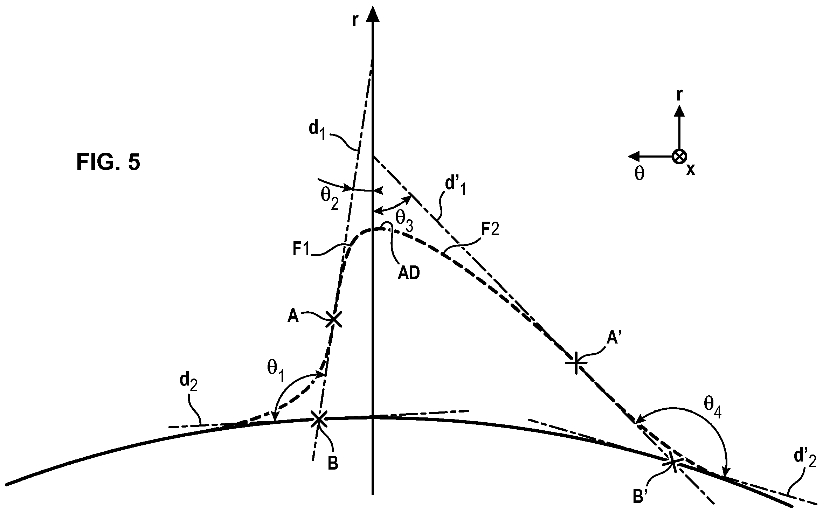

La surface S non-axisymétrique de la présente pièce est remarquable en ce qu'elle définit au moins une ailette 4 qui présente une section transversale (section prise suivant un plan transversal), asymétrique. Par plan transversal on entend un plan particulaire à une tangente à une corde de l'ailette 4 au niveau du point de la corde où la section est réalisée. La section de cette ailette est représentée sur la figure 5.

Par section transversale asymétrique on comprend que la section transversale, en tant que telle, ne présente aucun plan ou axe de symétrie.

Avantageusement l'ailette 4 présente la section asymétrique sur au moins 50% d'une longueur d'une corde de l'ailette. Plus particulièrement, il est possible que l'ailette ne présente pas cette section asymétrique dans la zone proche de son bord d'attaque ou dans la zone proche de son bord de fuite.

Cette ailette à section asymétrique permet de bloquer l'écoulement de passage et diminue la génération du sillage d'ailette. La section, et en particulier son profil, de l'ailette présente avantageusement deux faces obliques F1 et F2 se rejoignant sur une arête dorsale AD, une face F1 orientée vers l'intrados de la première pale 3I ayant une pente plus raide qu'une face F2 orientée vers l'extrados de la deuxième pale 3E.

Ces deux faces obliques F1 et F2 se rejoignent sur l'arête dorsale AD, soit par un angle, soit par un raccord tangent. Les deux faces elles-mêmes se raccordent à la veine (reste de la surface S) soit par un angle soit par un raccord tangent. La face désigne donc l'intégralité du versant de l'ailette s'étendant entre l'arête dorsale AD et le point de raccord du versant ou face avec la surface S. La pente d'une face n'est pas nécessairement constante et peut varier entre le point de raccord entre la face, et la surface et l'arête dorsale AD.

Une face A est plus raide qu'une face B si la pente moyenne, donnée par le ratio entre la hauteur de l'arête dorsale AD sur la distance entre la projection de l'arête dorsale AD sur le moyeu et le point du moyeu où la face se raccorde à la surface S, est supérieure pour la face A que pour la face B.

Cette face raide F1 pour la partie orientée vers l'intrados de la première pale 3I et cette face arrondie F2 pour la partie orientée vers l'extrados de la deuxième pale 3E rendent l'ailette 4 plus robuste aux changements d'incidence et limite les pertes lorsque le flux d'air passant entre les pales est important.

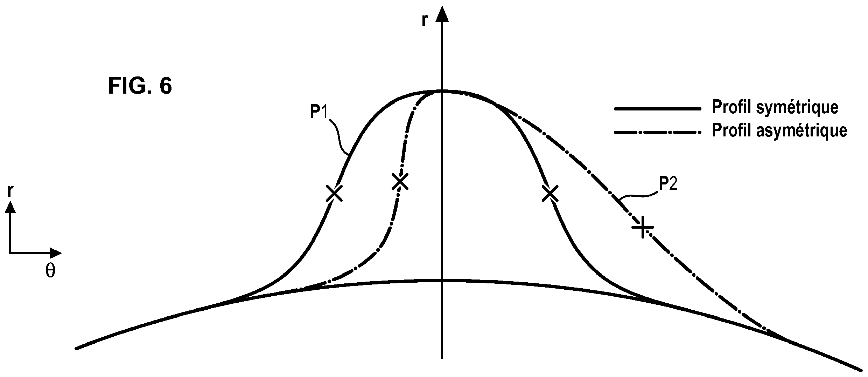

La figure 6 représente la différence entre une ailette ayant un profil symétrique P1 en traits interrompus et une ailette ayant un profil non-symétrique P2 en traits continus.

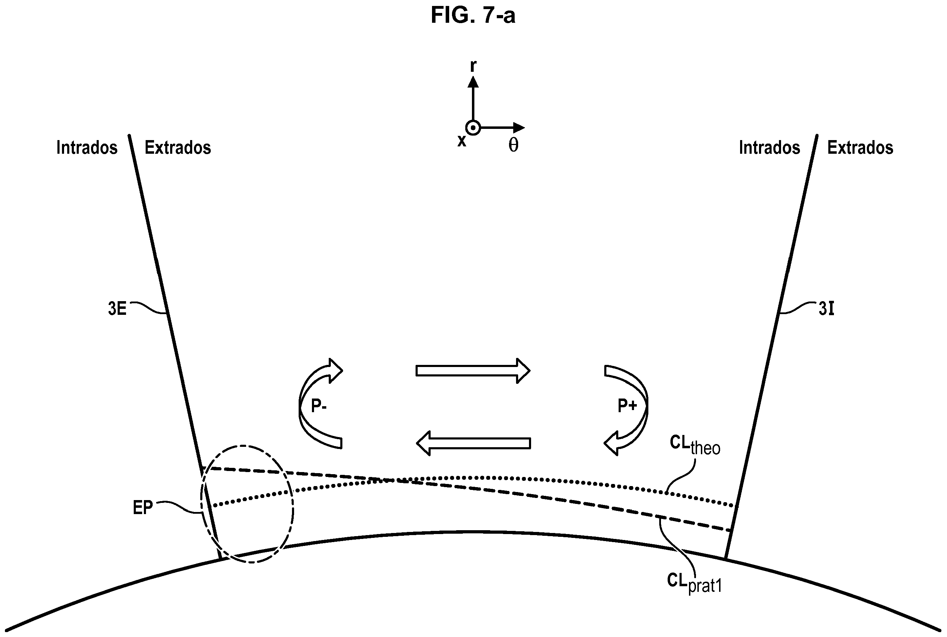

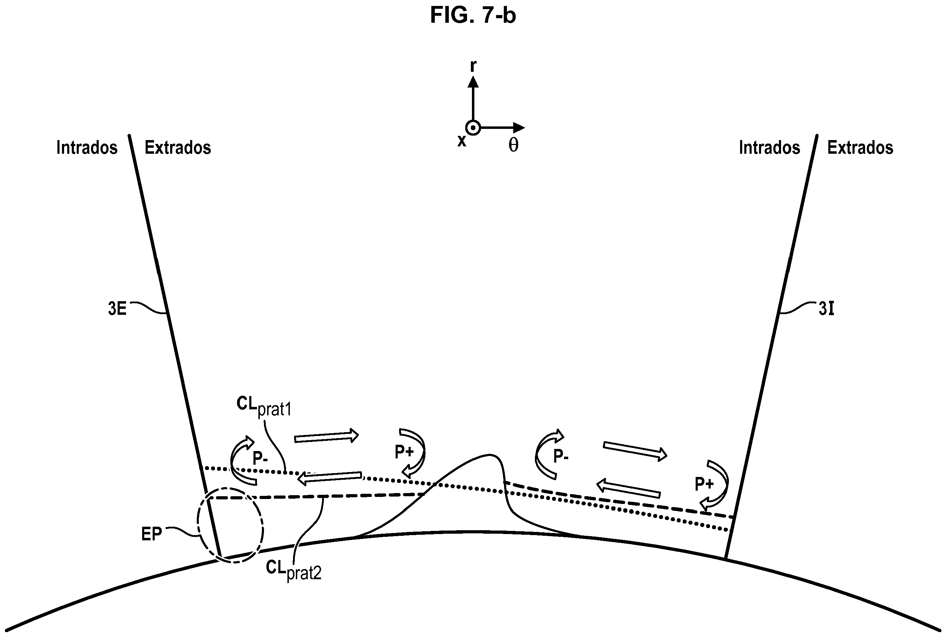

L'effet de l'écoulement de passage sur la couche limite de coin est représenté sur la figure 7-a. Le gradient azimutal de pression créé un écoulement de l'intrados de la première pale 3I vers l'extrados de la deuxième pale 3E (tourbillon de passage P+, P-). Ce faisant, il déforme la couche limite du moyeu, ce qui a pour effet de l'affiner du coté intrados de la pale 3I et de l'épaissir du coté extrados pale 3E. Sur cette figure cet épaissement est représenté dans le cercle EP. La couche limite théorique CLₜₕₑₒ et la couche limite pratique avec l'effet du tourbillon de passage CLₚᵣₐₜ₁ sont également représentées. Ceci résulte en une accumulation de fluide à faible quantité de mouvement, plus sensible aux perturbations venant de l'écoulement principal et plus susceptible de décoller.

La figure 7-b représente le même phénomène avec cette fois ci l'ajout d'une ailette entre les pales 3I et 3E. De nouveaux gradients de pressions sont établis et des tourbillons de passage (P+, P-) présentent une amplitude plus faible. Cette ailette offre aussi l'avantage d'affiner la couche limite de coin de la pale 3E (CLₚᵣₐₜ₂) par rapport au cas où il n'y a pas d'ailette (CLₚᵣₐₜ₁). Cette couche limite est alors plus résistante au décollement et génère moins de pertes.

Ainsi l'ailette proposée permet que l'écoulement intrados vers extrados soit limité au maximum afin de réduire la taille de la couche limite de coin. La pente raide de l'ailette côté intrados de la première pale 3I bloque ainsi cet écoulement.

De l'autre côté, il faut limiter les risques de décrochage de la couche limite qui passe au-dessus de l'ailette. En effet, une forte pente de ce côté augmenterait les pertes de manière significative et annulerait les bénéfices apportés par l'ailette 4. Grâce à sa pente faible côté extrados de la deuxième pale 3E, l'ailette 4 présente sur cette pièce 1 permet d'offrir ce compromis.

Sur la figure 5 d₁ représente une première tangente au profil de l'ailette au niveau d'un point d'inflexion A de la face orientée vers l'intrados de la première pale 3I. d₂ représente une deuxième tangente à la surface S au niveau d'un point d'intersection de la première tangent d₁ et de la surface S. Θ₁ représente un premier angle entre la première tangente d₁ et la deuxième tangente d₂. d₁' représente une troisième tangente au profil de l'ailette au niveau d'un point d'inflexion de la face orientée vers l'extrados de la deuxième pale 3E. d₂' représente une quatrième tangente à la surface au niveau de l'intersection de la troisième tangente d₁' et de la surface S. Θ₄ représente un deuxième angle entre la troisième tangente d₁' et la quatrième tangente d₂'. Le premier angle Θ₁ est plus petit que le deuxième angle Θ₄. De manière avantageuse le premier angle Θ₁ est compris entre 90° et 130° et le deuxième angle Θ₄ est inférieur à 160°.

Un point d'inflexion de la face est un point auquel il y a inversion de la concavité de la face. La concavité de la face passe alors du type « convexe » au type « concave » (ou l'inverse). Ce point d'inflexion est le point où la dérivée du profil de la face change de signe. Dans le cas où la face est représentée par une fonction affine, les tangentes à la face en tous points de cette face sont identiques, ainsi dans ce cas le point d'inflexion est l'un quelconque des points de la face.

### Dimensions et position de l'ailette

La position axiale de l'ailette et ses dimensions sont définies de manière à limiter les pertes de pression générées par la présence de l'ailette.

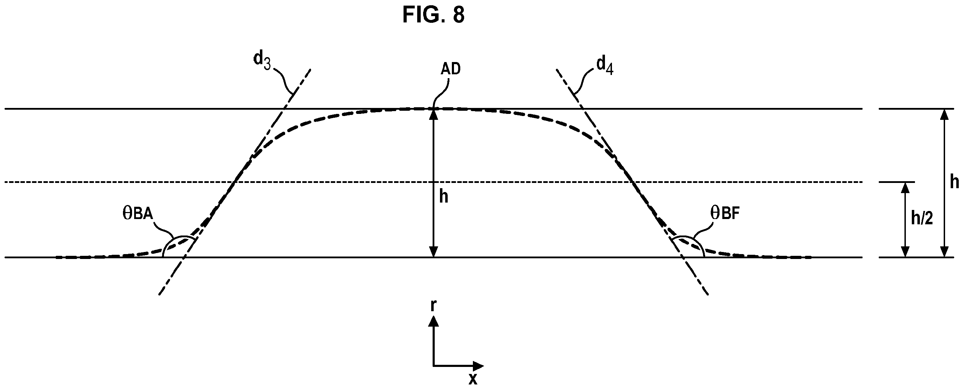

Chaque ailette 4 peut en outre présenter des extrémités biseautées telles qu'on le voit sur les figures 2 et 3. La figure 8 représente une section longitudinale de l'ailette 4, sur cette figure 8 l'ailette présente deux extrémités biseautées. Cette section est représentée via une coupe passant par l'arête dorsale AD de l'ailette et l'axe de révolution du stator ou du rotor supportant l'ailette et les pales. Sur cette figure est donc représentée la hauteur h de l'arête dorsale AD de l'ailette 4 par rapport à la surface S, en fonction de la direction axiale. Cette section présente deux parties, dans la première partie un profil de la section est globalement croissant et dans la deuxième partie le profil de la section est globalement décroissant. Pour chaque partie on définit comme point de mi-hauteur, le point de la section auquel la hauteur de l'ailette 4 est égale à la moitié de la hauteur maximale de l'ailette 4. Il existe deux points de mi-hauteur associés respectivement à la première partie et à la deuxième partie. d₃ représente une tangente à la section au niveau du point de mi-hauteur de la première partie. Cette tangente d₃ croise la surface S en formant un quatrième angle noté Θ_{BA}. d₄ représente une tangente à la section au niveau du point de mi-hauteur de la deuxième partie. Cette tangente d₄ croise la surface S en formant un cinquième angle noté Θ_{BF}. De manière avantageuse le quatrième angle et le cinquième angle sont compris entre 90° et 160.

L'ailette 4 présente une largeur comprise entre 1% et 40% de la distance entre l'intrados de la première pale 3I et l'extrados de la deuxième pale 3E. La largeur considérée ici est la largeur maximale de la base de l'ailette 4 (qui est sensiblement constante, hormis au niveau des biseaux d'attaque et de fuite). Cette largeur et la distance entre l'intrados de la première pale 3I et l'extrados de la deuxième pale 3E s'apprécient préférentiellement selon des plans parallèles aux plans extrémaux PS, PR lesquels sont visibles sur les figures 3 et 4.

L'ailette 4 présente une longueur comprise entre 5% et 120% de la longueur de la corde de la pale adjacente (3E ou 3I). Cette longueur de l'ailette offre l'avantage de minimiser la trainée générée par l'ailette 4.

La corde d'une pale est une ligne allant du bord d'attaque au bord de fuite de la pale.

La localisation de l'ailette 4 est en particulier définie par son point extrémal amont, qui est une position d'attaque sur la surface S, depuis laquelle l'ailette 4 s'étend (en particulier en suivant le squelette des pales 3I, 3E).

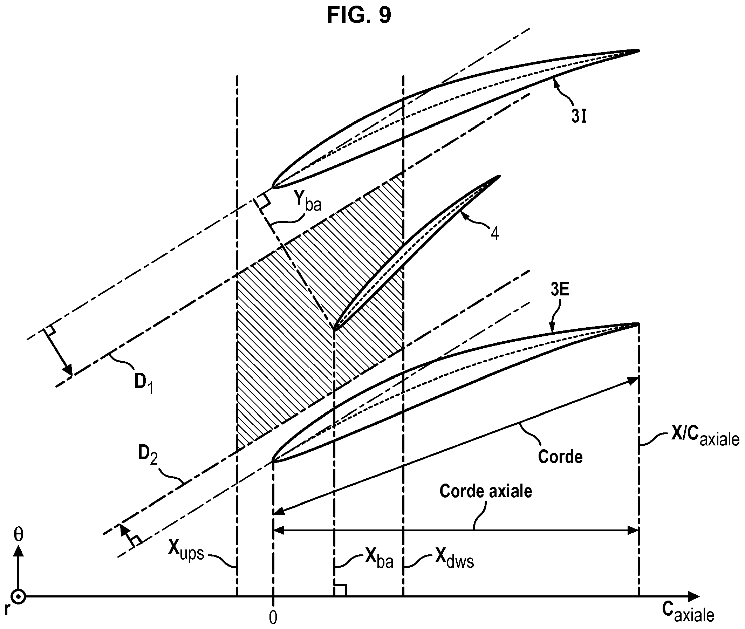

La position d'attaque de l'ailette 4 est définie dans le référentiel de la figure 9 par des coordonnées X_{BA} et Y_{BA}. Ces coordonnées sont respectivement une coordonnée axiale et une coordonnée azimutale de la position d'attaque de l'ailette.

La première coordonnée X_{BA} désigne une position (axiale) le long d'une corde de pale 3I, 3E s'étendant d'un bord d'attaque BA à un bord de fuite BF de la pale 3I, 3E, exprimée en longueur relative (en d'autres termes, à X_{BA}=0 correspond à un alignement sur les bords d'attaque BA et X_{BA}=1 correspond à un alignement avec les bords de fuite BF des pales 3I, 3E). Ceci permet donc de définir les positions Xᵤₚₛ et X_{dws} extrémale de la position d'attaque de l'ailette 4. De façon préférée, la position axiale d'attaque est située à entre -10% et 50% de longueur relative de la corde de pale 3I, 3E (i.e. X_{BA} appartient à [-0,1 ;0,5]).

On note que l'ailette 4 n'est pas forcément comprise entre les bords d'attaque BA et de fuite BF des pales 3I, 3E et peut s'étendre axialement en aval du bord de fuite BF ou en amont du bord d'attaque BA.

La deuxième coordonnée Y_{BA} désigne une position (azimutale) le long d'une largeur de canal s'étendant de l'extrados de la deuxième pale 3E à l'intrados de la première pale 3I, exprimée en longueur relative (en d'autres termes, Y_{BA}=0 correspond à un point contre l'extrados de la deuxième pale 3E et Y_{BA}=1 correspond à un point contre l'intrados de la première pale 3I). Ceci permet de définir les distances D1 et D2 de la position azimutale d'attaque par rapport à respectivement la corde de la première pale 3I et la corde de la deuxième pale 3E. De façon préférée, la position azimutale d'attaque est située à une distance de l'extrados de la deuxième pale 3E comprise entre 5% et 95% de la largeur de canal (i.e. Y_{BA} appartient à [0,05 ;0,95]).

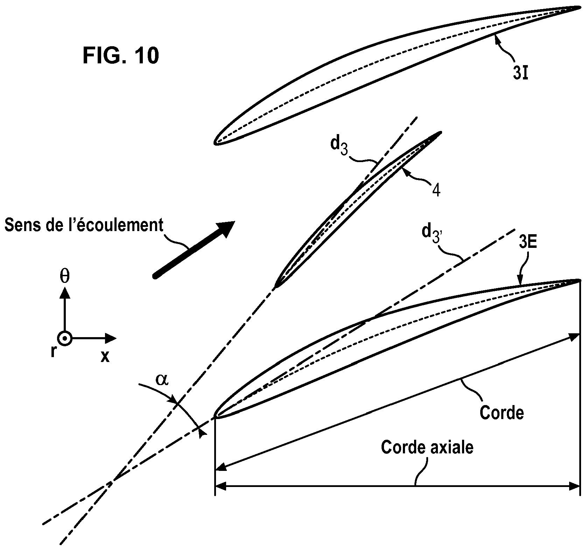

La figure 10 représente une tangente d₃ à une corde de l'ailette 4 au niveau de la position d'attaque de l'ailette et une tangente d₃' à la corde de la pale au niveau d'une position d'attaque de la pale (3E ou 3I). Avantageusement les deux tangentes se croisent en formant un sixième angle a compris entre -10° et +10°.

Les différentes pales sont généralement agencées de sorte à ce que les tangentes à la corde des pales au niveau des positions d'attaques des pales soient parallèles. Ainsi le sixième angle a peut être calculé à partir de la première pale 3I ou la deuxième pale 3E. De manière avantageuse le sixième angle a est calculé à partir de la pale la plus proche de l'ailette afin d'éviter les désadaptations en incidence. Par défaut il est calculé par rapport à la deuxième pale 3E.

Il peut y avoir une, deux ou trois ailettes 4 sur la veine. La figure 3 représente une solution à une ailette 4, et la figure 4 à deux ailettes, mais on comprendra que l'invention n'est pas limitée à ce cas.

De façon préférée, chaque ailette 4 présente une trace (c'est-à-dire une trajectoire) correspondant à la ligne moyenne de squelettes des première et deuxième pales 3I, 3E. Le plus souvent, toutes les pales ont le même squelette, c'est pourquoi toutes les ailettes 4 et pales 3I, 3E présentent une courbure similaire, mais on comprendra que l'invention n'est pas limitée à ce cas.

La pièce 1 peut former une roue à aubes ou un redresseur de compresseur. De manière avantageuse la roue à aubes est constituée d'un ensemble de pièces, de même qu'une couronne de redresseur. Un redresseur de compresseur est avantageusement constitué d'une seule pièce.

## Revendications

1. Pièce de turbomachine comprenant :
- au moins des première et deuxième pales (3I, 3E), et
- une plateforme (2) à partir de laquelle s'étendent les pales (3I, 3E),
- la plateforme (2) présentant entre l'intrados de la première pale (3I) et l'extrados de la deuxième pale (3E) une surface (S) non axisymétrique définissant au moins une ailette (4),
- une section transversale de l'ailette (4) est asymétrique, ladite section transversale asymétrique comprenant deux faces obliques (F1, F2) se rejoignant sur une arête dorsale (AD), étant **caractérisée en ce qu'** une face (F1) orientée vers l'intrados de la première pale (3I) ayant une pente plus raide qu'une face (F2) orientée vers l'extrados de la deuxième pale (3E).

2. Pièce selon la revendication 1, dans laquelle l'ailette (4) présente la section transversale asymétrique sur au moins 50% d'une longueur d'une corde de l'ailette (4).

3. Pièce selon l'une des revendications 1 et 2, dans laquelle :
- une première tangente (d₁) à la section transversale asymétrique de l'ailette (4) au niveau d'un point d'inflexion (A) de la face (F1) orientée vers l'intrados de la première pale (3I) et
- une deuxième tangente (d₂) à la surface (S) au niveau de l'intersection de la première tangente (d₁) et de la surface (S), se croisent en formant un premier angle (Θ₁),
- une troisième tangente (d₁') à la section transversale asymétrique de l'ailette au niveau d'un point d'inflexion (A') de la face (F2) orientée vers l'extrados de la deuxième pale (3E) et
- une quatrième tangente (dz') à la surface (S) au niveau de l'intersection de la troisième tangente (d₁') et de la surface (S), se croisent en formant un second angle (Θ₄);
- le premier angle (Θ₁) est plus faible que le deuxième angle (Θ₄).

4. Pièce selon la revendication 3 dans laquelle le premier angle (Θ₁) est compris entre 90° et 130° et le deuxième angle (Θ₄) est inférieur à 160°.

5. Pièce selon l'une des revendications 1 à 4, dans laquelle une section longitudinale de l'ailette (4) comprend :
- une première partie dans laquelle une distance (h) entre l'arête dorsale (AD) et la surface (S) est croissante et
- une deuxième partie dans laquelle la distance (h) est décroissante,
- une tangente (d₃) à la section longitudinale au niveau d'un point de mi-hauteur de la première partie et la surface (S) se croisent en formant un quatrième angle (Θ_{BA}) en particulier compris entre 90° et 160 ;
- une tangente (d₄) à la section longitudinale au niveau d'un point de mi-hauteur de la deuxième partie et la surface (S) se croisent en formant un cinquième angle (Θ_{BF}) en particulier compris entre 90° et 160.

6. Pièce selon l'une des revendications 1 à 5 dans laquelle :
- la position d'attaque de l'ailette (4) est située à entre -10% et 50% de longueur relative d'une corde de pale (3I, 3E) s'étendant d'un bord d'attaque (BA) à un bord de fuite (BF) de la pale (3I, 3E) et
- la distance entre la position d'attaque de l'ailette (4) et l'extrados de la deuxième pale (3E) est comprise entre 5% et 95% de la distance entre l'intrados de la première pale (3I) et l'extrados de la deuxième pale (3E).

7. Pièce selon l'une des revendications 1 à 6 dans laquelle :
- une tangente à une corde de l'ailette (4) au niveau de la position d'attaque de l'ailette et
- une tangente à la corde de la pale (3I, 3E) au niveau d'une position d'attaque de la pale
se croisent en formant un sixième angle (α) compris entre -10° et +10°.

8. Pièce selon l'une des revendications 1 à 7 dans laquelle
l'ailette (4) a une longueur comprise entre 5% et 120% de la longueur de la corde de la pale (3I, 3E).

9. Pièce selon l'une des revendications 1 à 8 dans laquelle
l'ailette (4) a une largeur comprise entre 1% et 40% de la distance entre l'intrados de la première pale (3I) et l'extrados de la deuxième pale (3E).

10. Pièce ou ensemble de pièces selon l'une des revendications 1 à 9, dans laquelle la plateforme (2) présente une forme annulaire le long de laquelle sont régulièrement disposées une pluralité de pales (3I, 3E).

11. Pièce ou ensemble de pièces selon la revendication 10, dans laquelle la plateforme (2) comprend la même surface (S) non-axisymétrique entre chaque paire de pales (3I, 3E) consécutives.

12. Pièce ou ensemble de pièces selon la revendication 11, étant une roue à aubes ou un redresseur de compresseur.

13. Turbomachine comprenant une pièce (1) ou ensemble de pièces selon l'une des revendications précédentes.

14. Aéronef comprenant une turbomachine selon la revendication 13.

## Patentansprüche

1. Turbomaschinenteil, umfassend:
- mindestens eine erste und eine zweite Schaufel (3I, 3E), und
- eine Plattform (2), von der aus sich die Schaufeln (3I, 3E) erstrecken,
- wobei die Plattform (2) zwischen der Druckseite der ersten Schaufel (31) und der Saugseite der zweiten Schaufel (3E) eine nicht axialsymmetrische Oberfläche (S) aufweist, die mindestens eine Rippe (4) definiert,
- ein Querschnitt der Rippe (4) asymmetrisch ist, wobei der asymmetrische Querschnitt zwei schräge Seiten (F1, F2) umfasst, die an einer Rückenkante (AD) aufeinandertreffen,
**dadurch gekennzeichnet, dass** eine Seite (F1), die zur Druckseite der ersten Schaufel (31) orientiert ist, eine steilere Steigung als eine Seite (F2), die zur Saugseite der zweiten Schaufel (3E) orientiert ist, aufweist.

2. Teil nach Anspruch 1, wobei die Rippe (4) den asymmetrischen Querschnitt über mindestens 50% einer Länge einer Sehne der Rippe (4) aufweist.

3. Teil nach einem der Ansprüche 1 und 2, wobei:
- sich eine erste Tangente (d₁) am asymmetrischen Querschnitt der Rippe (4) an einem Wendepunkt (A) der Seite (F1), die zur Druckseite der ersten Schaufel (31) orientiert ist, und
- eine zweite Tangente (d₂) an der Oberfläche (S) an der Kreuzung der ersten Tangente (d₁) und der Oberfläche (S) kreuzen und dabei einen ersten Winkel (Θ₁) bilden,
- sich eine dritte Tangente (d₁') am asymmetrischen Querschnitt der Rippe an einem Wendepunkt (A') der Seite (F2), die zur Saugseite der zweiten Schaufel (3E) orientiert ist, und
- eine vierte Tangente (d₂') an der Oberfläche (S) an der Kreuzung der dritten Tangente (d₁') und der Oberfläche (S) sich kreuzen und dabei einen zweiten Winkel (Θ₄) bilden;
- der erste Winkel (Θ₁) kleiner als der zweite Winkel (Θ₄) ist.

4. Teil nach Anspruch 3, wobei der erste Winkel (Θ₁) zwischen 90° und 130° liegt und der zweite Winkel (Θ₄) kleiner als 160° ist.

5. Teil nach einem der Ansprüche 1 bis 4, wobei ein Längsschnitt der Rippe (4) umfasst:
- einen ersten Abschnitt, in dem ein Abstand (h) zwischen der Rückenkante (AD) und der Oberfläche (S) zunimmt, und
- einen zweiten Abschnitt, in dem der Abstand (h) abnimmt,
- sich eine Tangente (d₃) am Längsschnitt an einem Punkt auf halber Höhe des ersten Abschnitts und die Oberfläche (S) kreuzen und dabei einen vierten Winkel (Θ_{BA}) bilden, der insbesondere zwischen 90° und 160° liegt;
- sich eine Tangente (d₄) am Längsschnitt an einem Punkt auf halber Höhe des zweiten Teils und die Oberfläche (S) kreuzen und dabei einen fünften Winkel (Θ_{BF}) bilden, der insbesondere zwischen 90° und 160° liegt.

6. Teil nach einem der Ansprüche 1 bis 5, wobei:
- sich die Angriffsposition der Rippe (4) bei zwischen -10% und 50% der relativen Länge einer Sehne der Schaufel (3I, 3E) liegt, die sich von einer Vorderkante (BA) bis zu einer Hinterkante (BF) der Schaufel (3I, 3E) erstreckt, und
- der Abstand zwischen der Angriffsposition der Rippe (4) und der Saugseite der zweiten Schaufel (3E) zwischen 5% und 95% des Abstands zwischen der Druckseite der ersten Schaufel (31) und der Saugseite der zweiten Schaufel (3E) liegt.

7. Teil nach einem der Ansprüche 1 bis 6, wobei:
- sich eine Tangente an einer Sehne der Rippe (4) an der Angriffsposition der Rippe und
- eine Tangente an der Sehne der Schaufel (3I, 3E) an einer Angriffsposition der Schaufel kreuzen und dabei einen sechsten Winkel (α) bilden, der zwischen -10° und +10° liegt.

8. Teil nach einem der Ansprüche 1 bis 7, wobei die Rippe (4) eine Länge aufweist, die zwischen 5% und 120% der Länge der Sehne der Schaufel (3I, 3E) liegt.

9. Teil nach einem der Ansprüche 1 bis 8, wobei die Rippe (4) eine Breite aufweist, die zwischen 1% und 40% des Abstands zwischen der Druckseite der ersten Schaufel (31) und der Saugseite der zweiten Schaufel (3E) liegt.

10. Teil oder Satz von Teilen nach einem der Ansprüche 1 bis 9, wobei die Plattform (2) eine Ringform aufweist, an der entlang eine Vielzahl von Schaufeln (3I, 3E) regelmäßig angeordnet ist.

11. Teil oder Satz von Teilen nach Anspruch 10, wobei die Plattform (2) die gleiche nicht axialsymmetrische Oberfläche (S) zwischen jedem aufeinanderfolgenden Paar Schaufeln (3I, 3E) umfasst.

12. Teil oder Satz von Teilen nach Anspruch 11, wobei es sich um ein Schaufelrad oder einen Kompressorgleichrichter handelt.

13. Turbomaschine, umfassend ein Teil (1) oder einen Satz von Teilen nach einem der vorhergehenden Ansprüche.

14. Luftfahrzeug, umfassend eine Turbomaschine nach Anspruch 13.

## Claims

1. A part of a turbomachine comprising:
- at least first and second blades (3I, 3E), and
- a platform (2) from which the blades (3I, 3E) extend,
- the platform (2) having, between the pressure side of the first blade (3I) and the suction side of the second blade (3E), a non-axisymmetric surface (S) defining at least one fin (4),
- a cross-section of the fin (4) is asymmetrical, said asymmetrical cross-section comprising two oblique faces (F1, F2) meeting on a dorsal edge (AD), wherein a face (F1) oriented towards the pressure side of the first blade (3I) has a steeper slope than a face (F2) oriented towards the suction side of the second blade (3E).

2. A part according to claim 1, wherein the fin (4) presents the asymmetrical cross-section over at least 50% of a length of a chord of the fin (4).

3. A part according to one of claims 1 and 2, wherein:
- a first tangent (d₁) to the asymmetric cross-section of the fin (4) at an inflection point (A) of the face (F1) oriented towards the pressure side of the first blade (3I), and
- a second tangent (d₂) to the surface (S) at the intersection of the first tangent (d₁) and the surface (S),
intersect forming a first angle (Θ₁),
- a third tangent (d₁') to the asymmetric cross-section of the fin at a point of inflection (A') of the face (F2) oriented towards the suction side of the second blade (3E), and
- a fourth tangent (d₂') to the surface (S) at the intersection of the third tangent (d₁') and the surface (S), intersect forming a second angle (Θ₄);
- the first angle (Θ₁) being smaller than the second angle (Θ₄).

4. A part according to claim 3, wherein the first angle (Θ₁) is comprised between 90° and 130° and the second angle (Θ₄) is less than 160°.

5. A part according to one of claims 1 to 4, wherein
a longitudinal section of the fin (4) comprises:
- a first part in which a distance (h) between the dorsal edge (AD) and the surface (S) increases and
- a second part in which the distance (h) decreases,
- a tangent (d₃) to the longitudinal section at a half-height point of the first part and the surface (S) intersect forming a fourth angle (Θ_{BA}) in particular comprised between 90° and 160;
- a tangent (d₄) to the longitudinal section at a half-height point of the second part and the surface (S) intersect forming a fifth angle (Θ_{BF}) in particular comprised between 90° and 160.

6. A part according to one of claims 1 to 5, wherein:
- the leading position of the fin (4) is located at between -10% and 50% of the relative length of a blade chord (3I, 3E) extending from a leading edge (BA) to a trailing edge (BF) of the blade (3I, 3E) and
- the distance between the leading position of the fin (4) and the suction side of the second blade (3E) is comprised between 5% and 95% of the distance between the pressure side of the first blade (3I) and the suction side of the second blade (3E).

7. A part according to one of claims 1 to 6, wherein:
- a tangent to a chord of the fin (4) at the leading position of the fin and
- a tangent to the blade chord (3I, 3E) at a leading position of the blade intersect forming a sixth angle (a) comprised between -10° and +10°.

8. A part according to one of claims 1 to 7, wherein
the fin (4) has a length comprised between 5% and 120% of the length of the blade chord (3I, 3E).

9. A part according to one of claims 1 to 8, wherein
the fin (4) has a width comprised between 1% and 40% of the distance between the pressure side of the first blade (3I) and the suction side of the second blade (3E).

10. A part or assembly of parts according to one of claims 1 to 9, wherein the platform (2) comprises an annular shape along which a plurality of blades (3I, 3E) are regularly arranged.

11. A part or assembly of parts according to claim 10, wherein the platform (2) comprises the same non-axisymmetric surface (S) between each pair of consecutive blades (3I, 3E).

12. A part or assembly of parts according to claim 11, being an impeller or a compressor rectifier.

13. Turbomachine comprising a part (1) or assembly of parts according to one of the preceding claims.

14. An aircraft comprising a turbomachine according to claim 13.
